# EUROPEAN PATENT SPECIFICATION

(11) **EP 2 854 265 B1**
(45) Date of publication and mention of the grant of the patent: **04.05.2016**
(21) Application number: 13186269.0
(22) Date of filing: 27.09.2013
(51) Int. Cl.: H02K 35/02, H02K 35/04, H02K 7/18, F03B 13/14

(54) **Electric linear generators/motors and energy converting systems with the same**
Elektrische Lineargeneratoren/-motoren und Energieumwandlungssysteme damit
Moteurs/générateurs électriques linéaires et systèmes de conversion d'énergie avec celui-ci

(43) Date of publication of application: 01.04.2015
(60) Divisional application: 14185725.0
(73) Proprietor: King Abdulaziz City for Science & Technology (KACST), 11442 Riyadh (SA)
(72) Inventor: Ba-abbad, Mazen Abdullah, 11442 Riyadh (SA); Al-Ansari, Hany A., 11421 Riyadh (SA); Al-kudsi, Abdullah M., 11442 Riyadh (SA); Al-Otaibi, Zaid S., 11442 Riyadh (SA)
(74) Representative: Goddar, Heinz J.

(56) References cited:
- WO-A1-2010/094059
- WO-A1-2013/006832
- US-A- 4 539 485
- US-A1- 2008 106 101
- Anonymous: "Nozzle - Wikipedia, the free encyclopedia", , 18 October 2007 (2007-10-18), XP055106163, Retrieved from the Internet: URL:http://web.archive.org/web/20071018091 534/http://en.wikipedia.org/wiki/Nozzle [retrieved on 2014-03-07]

## Description

The present invention relates a device that can operate as both an electric linear generator or motor according to the preamble of claim 1.

Today, there are many electrical power generation systems that convert mechanical and/or thermal energy into electrical energy. However, most of these systems are very complex and require frequent maintenance, which make them expensive. In addition, when combusting certain fuels, such as low grade fuels that contain many contaminants, or waste (in waste to electricity power plants) many existing systems experience corrosion and suffer from debris and deposits blocking the system.

Combining the electric power generation systems with water purification systems that take the waste heat and utilize it to purify water was done in the past decades. For example, some systems use the low grade heat rejected in the condenser of a steam turbine to purify Water. Other systems use the hot exhaust gas of a gas turbine or piston engine to purify water. However, these systems are very complex and very expensive to maintain and are only economically viable at large scale.

WO 2013/006832 discloses a device according to the preamble of claim 1.

WO 2010/094059 A1 discloses a device that can operate as both an electric linear generator or motor comprising an elongate stator, an electrical induction coil extending lengthwise within or around the stator, a rotor including or carrying at least one permanent magnet and. capable of moving linearly to and fro relative to the stator, and a means for providing connection of the respective end of the coil with an electrical energy storage, electrical energy source or electrical device. Said known device comprises a centrally located chamber formed by a linear membrane.

US 2008/106101 A1 relates to an apparatus for generating electricify from wave action, wherein one end of a pipe includes or is provided with a spherical or cylindrical section having a cutout in the length wise direction of the pipe and transversal thereto and being covered by one of two diaphragms.

Accordingly, it is the main object of the present invention to provide a less complex and cheaper way of converting energy into electric energy in particular from moving or expanding fluids or vice versa with less corrosion and contamination.

This object is solved according to the present invention by a device according to claim 1.

In the present application the term "rotor" is used for the movable part of the linear generator. It should therefore be understood that the term "rotor" does not-relate to a rotating body but to a body moving linearly to and fro.

According to a special embodiment of the device the rotor is substantially rod-shaped.

In particular, both ends of the rod can be expanded by way of a respective section with a conical outer side.

Conveniently, the rotor is electromagnetically suspended in the sleeve.

Preferably, the sleeve includes at least one superconducting magnet or electromagnet preferably with dynamic control or is surrounded by at least one superconducting magnet or electromagnet preferably with dynamic control.

The invention recognizes that by using a special kind of electric linear generator/motor energy conversion, in particular integrated energy conversion, can be simplified and therefore cheaper in production and/or maintenance. Energy can be converted from a less usable form to a more usable form in a simple and low cost way.

A simple free-piston linear generator/motor is used to construct integrated energy conversion systems in a much lower cost and simpler way than in the prior art.

By way of the invention corrosion and contamination effects can be reduced by isolating corrosive and/or contaminating fluids from hard to reach and system critical areas. This is done by using diaphragms. All of these features alone or in combination simplify the design and therefore the cost for the whole system is reduced and the maintenance is simplified.

Further features and .advantages of the invention will become clear from the accompanying claims and the following description, in which preferred embodiments of the invention are illustrated in detail with reference to the schematic drawings, wherein
- Figure 1: shows a perspective view an electric linear generator/motor;
- Figure 2: shows two explosion views of the generator/motor of figure 1;
- Figure 3: shows a detail of the generator/motor of figure 1;
- Figure 4: shows a sequence of the moving of a rotor of the generator/motor shown in figure 1;
- Figure 5: shows the operation of the generator/motor or figure 1;
- Figure 6: shows a side view of an electric linear generator/motor according to a first preferred embodiment of the invention;
- Figure 7: shows the generator/motor of figure 6 with part of the pipe being removed;
- Figure 8: shows the generator/motor of figure 6 with partly removed components;
- Figure 9: shows the generator/motor of figure 6 with partly removed components and at adifferentangle;
- Figure 10: shows diaphragms that are arranged in a row within the generator/motor of figure 6 in different states;
- Figure 11: shows an example of the practical use of the generator/motor of figure 1;
- Figure 12: shows the generator/motor of figure 11 at a different time;
- Figure 13: shows a further example of the practical use of the generator/motor of figure 1 in a modified form;
- Figure 14: shows the generator/motor of figure 13 at a different time;
- Figures 15: shows a further example of the practical use of an electric linear generator/motor according to a further embodiment of the invention; and
- Figure 16: shows the generator/motor of figure 15 in a different operation state.

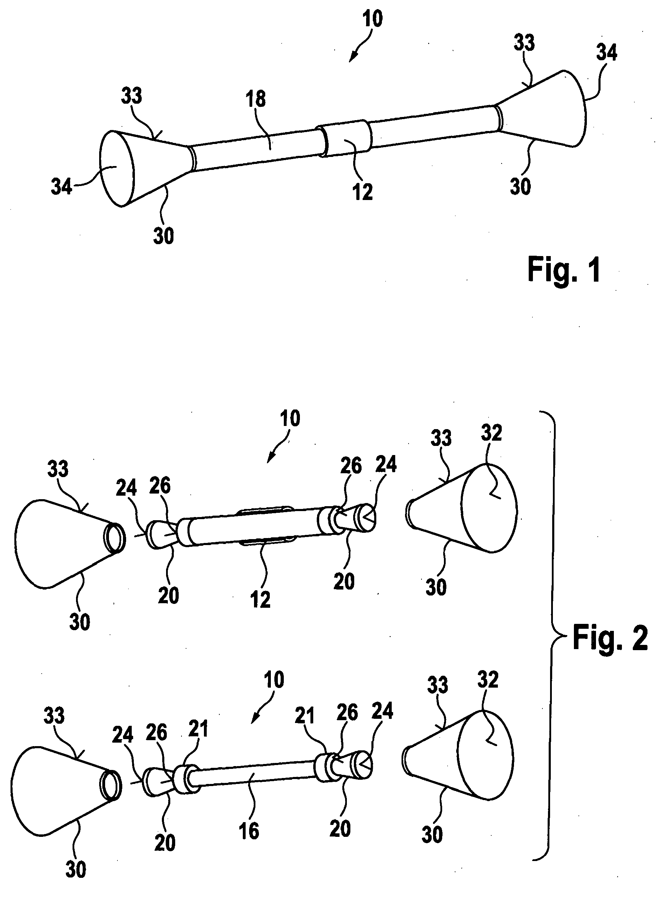

Figures 1 to 5 as well as figures 11 and 12 and the related description relate to an example useful for understanding the invention.

Water purification is the process of removing undesirable chemicals, biological contaminants, suspended solids and gases from contaminated water. The goal is to produce water fit for specific purpose. Most water is purified for human consumption (drinking water) but water purification may also be deigned for a variety of other purposes, including meeting the requirements of medical, pharmacological, chemical and industrial applications. In general the method used include physical processes such as filtration, sedimentation, and distillation, biological processes such as slow sand filters and biologically active carbon, chemical processes such as flocculation and chlorination and the use of electromagnetic radiation, such as ultra violet light.

Distillation is a method of separating mixtures based on differences in volatility of components in a boiling liquid mixture. Commercially, distillation has a number of applications. It is used to separate crude oil into more fractions for specific uses such as transport, power generation and heating. Water is distilled to remove impurities, such as salt from sea water. This is also called desalination. Water desalination is a process by which salt is separated from salt water. Evaporation is an effective method of achieving this goal. Evaporation is a process involving a phase change in water molecules from a liquid to a gaseous state while leaving the water surface and the dissolved materials in the liquid state. The rate of evaporation is enhanced by increasing the liquid temperature and/or decreasing the pressure in the liquid, i.e., performing evaporation in a vacuum.

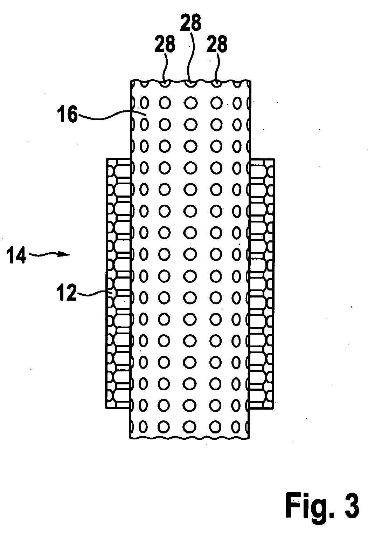

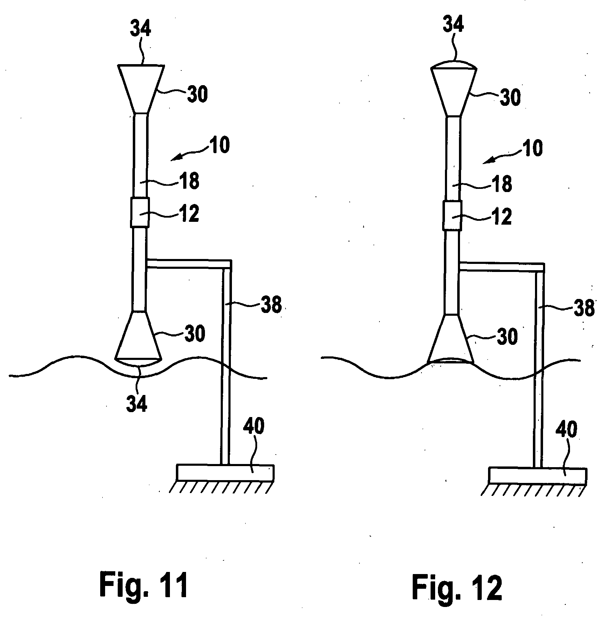

Figures 1 to 5 show an electric linear generator/motor 10 and figures 11 and 12 show the same in an exemplary use. Said electric linear generator 10 comprises an elongate stator 12, an electrical induction coil 14 (see figure 3) extending lengthwise within the stator 12, a rotor 16 (see in particular figure 3) capable of moving linearly to and fro relative to the stator 12, and means (not shown) for providing convection of the respective ends of the coil with an electrical device (not shown) or the like.

Furthermore, said generator 10 comprises a pipe 18 The stator 12 is designed as a sleeve and sits on the pipe 18 and the rotor 16 is located in the pipe 18 and is electromagnetically suspended in the sleeve. The central or main part of the rotor 16 is substantially rod-shaped (see in particular figure 2). Both ends of said rod are expanded by way of a respective section 20 with a conical outer side 22.

Adjacent to said section 20 is a section 21 with a larger outer diameter than the main part of the rod (see in particular figure 2). In this way the rotor 16 or rod provides preferably planar inner fluid impact surfaces 24 and 26 at each end of the rotor 16. As can be seen in figures 2 (above) and 3, the rotor 16 or rod is surrounded by permanent magnets some of which are labeled as 28. Said permanents magnets 28 are for magnetic or electromagnetic suspension of the rotor 16 in the stator 12 our sleeve. To this end, the stator 12 includes for example at least one electromagnet (not shown).

As can be seen in figure 1, at both ends of the pipe 18 a section 30 is located, the inner surface 32 and outer surface 33 thereof expanding to the respective pipe end. In particular, in the present example the inner surface 32 and the outer surface 33 of the sections 30 is conical. The section 30 are removeably fixed to the pipe 18 and both pipe ends or outer sides of the sections 30 are sealed by a flexible diaphragm 34.

Furthermore, the pipe 18 is totally filled with an incompressible fluid 36 between the two diaphragms 34.

In the top of figure 2 the stator 12 is section cut-out and removed and in the bottom of figure 2 the permanent magnets 28 are removed.

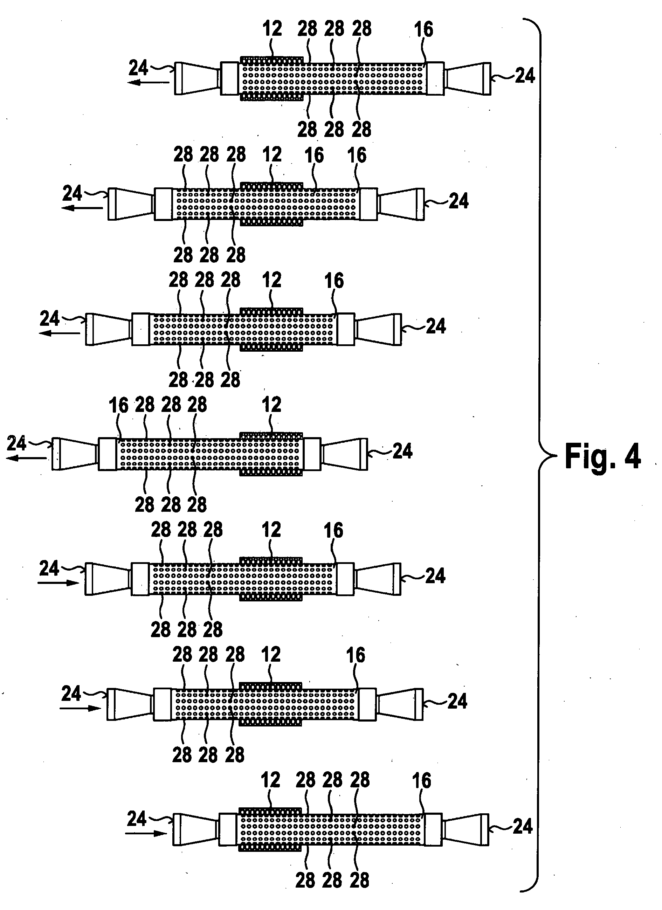

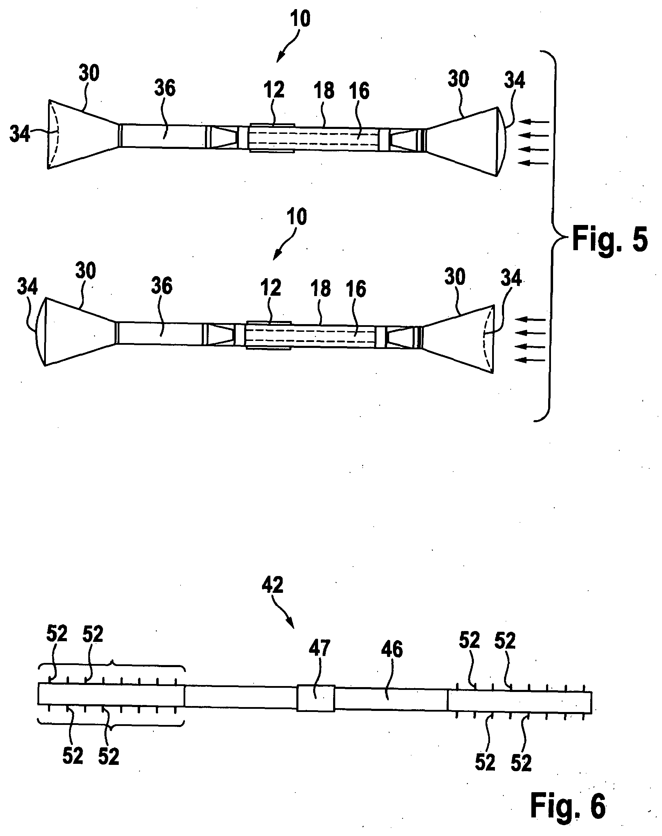

As shown in figures 4 and 5, the rotor 16 moves under the action of a pressure difference, fuel jet impulse and/or fluid friction. The fluid jet is formed in one of the section 30 as a result of displacement of one of the diaphragms 34. Fluid friction losses are minimized and reduced to pipe wall friction losses, when the fluid drag on the rotor 16 is used for added propulsion. Figure 5 shows the two extremepositions of the rotor 16 that moves to and fro relative to the fixed stator 12. Figure 4 shows a kind of sequence of snap-shot type figures showing thy motion of the rotor 16 within the pipe 18. The relative motion between the permanent magnets 28 and the induction coil 14 generates electrical induction currents that flow in the electrical induction coil 14 so that electrical power is generated.

Furthermore, as shown in figure 5, when the diaphragm 34 is forced a little bit into the associated section 30 (see left top of figure 5), the incompressible fluid 36 is pressed to the right, leading to the diaphragm 34 on the right side becoming extended to the outside. In the bottom of figure 5 the opposite case, i.e. pressure from the right side, movement of the rotor 16 to the left side and extending of the diaphragm 34 on the left side to the outside is shown.

As shown in figures 11 and 12, the electric linear generator 10 can be used for sea wave harvesting (wave energy converting system 37). To this end, said generator 10 could be oriented vertically and the pipe 18 can be fixed to a pole 38 with a base 40 that is fixed or anchored to a seabed (not shown). The wave motion (see figures 11 and 12) results in that sea water is moved vertically and presses up the lower diaphragm 34. This in turn moves the rotor (not shown) in the pipe 18 upward and induces electric current in the electrical induction coil in the static stator 12.

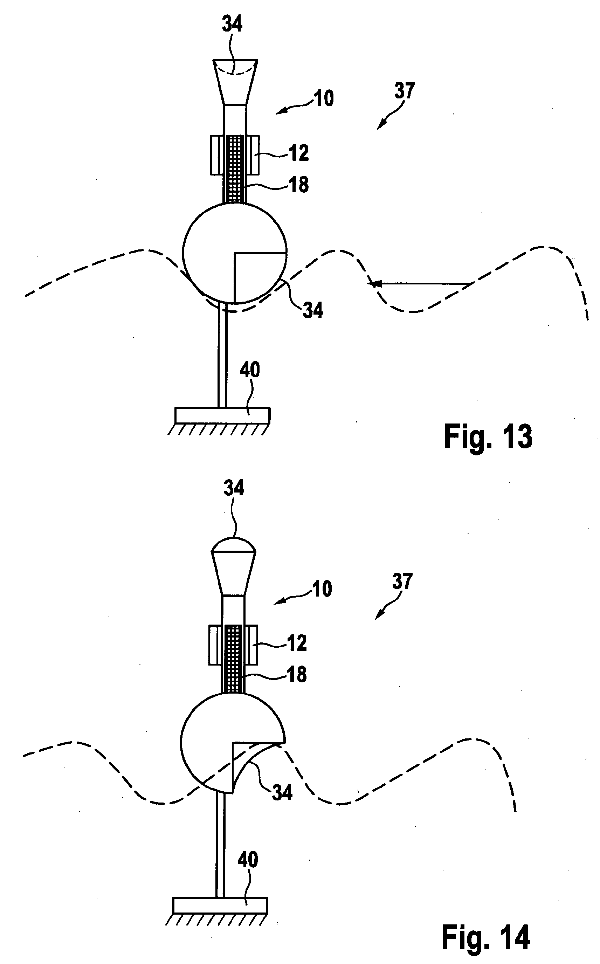

Furthermore, as shown in figures 13 and 14, a modified electric linear generator/motor 10 can be used for harvesting wave energy (wave energy converting system 37), where both vertical buoyancy and horizontal (wave propagation) components of wave momentum are harvested.

The pipe 18 could be filled with a fluid less dense than water (e. g. oil). The lower part of the pipe or attached to the pipe can be in the form of a sphere or in the form of a cylinder extending out of the paper with a cutout opened to the lower and the transversal side covered by a diaphragm 34.

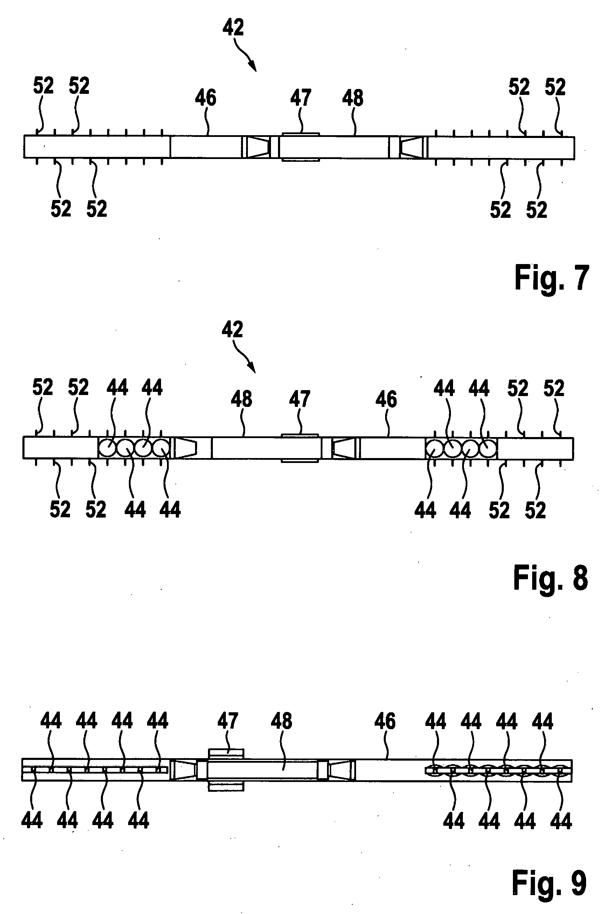

Figures 6 to 10 show a further electric linear .generator/motor 42 according to a special embodiment of the invention. In contrast to the electric linear generator 10 of figures 1 to 5 and 11 and 12 at each end of the pipe no sections 30 are arranged and several flexible diaphragms 44 are arranged. Said diaphragms 44 are within the pipe ends. In this way the volume and the amount of the incompressible fluid displaced can be increased, i.e. the capacity of the electric linear generator 42 can be increased. In principle, that generator 42 has the same principle of operation as the generator 10. The rotor 48 is electromagnetically or magnetically suspended and at moves to and fro under the action of the motion of the internal fluid when the diaphragms are in extended or contracted position. Pipe 46 is the outer casing and it contains the rotor 48, the diaphragms and the internal fluid. When the rotor 48 moves, the fluid compresses all diaphragms 44 (see figure 9) on one side and causes suction on all the diaphragms 44 on the other side. This can be used similarly to the "single"-diaphragm-generator 10. This happens if the system is used as a pump. When a compressed fluid (e.g. steam) is allowed to enter one set of diaphragms, it will cause the diaphragms to extract and move the internal fluid (e.g. oil) to push the rotor. At the same time, the used steam (or gas) that is contained on the other set of diaphragms, will be exhausted by the internal fluid pressing on them.

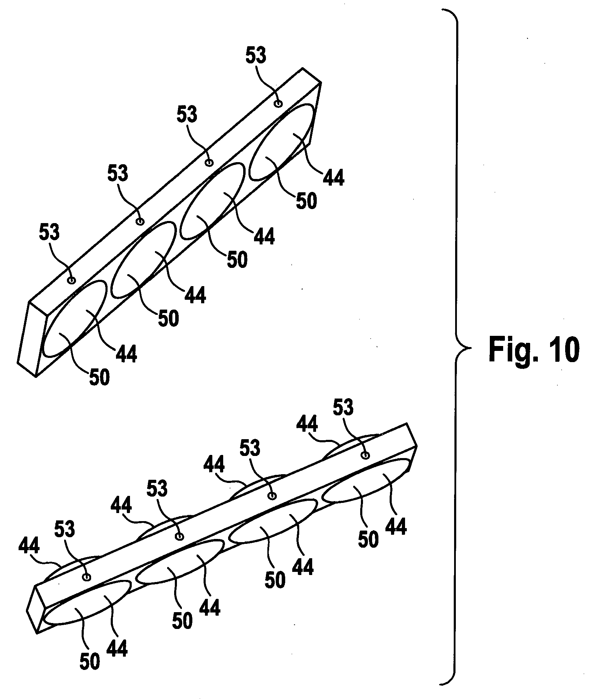

In particular, as shown in figure 10 (upper side shows diaphragms in contracted position, whereas the lower side shows them in extended position), at each pipe end several chambers 50 are arranged in a row. Each chamber 50 has two oppositely disposed walls that ;are formed by two flexible diaphragms 44 that are oriented in the lengthwise direction of the pipe 46. Said cambers 50 are in fluid communication with the environment by way of two oppositely disposed lateral connections only some of them being labeled as 52 and openings only one of them can be seen and only some of them are labeled as 53.

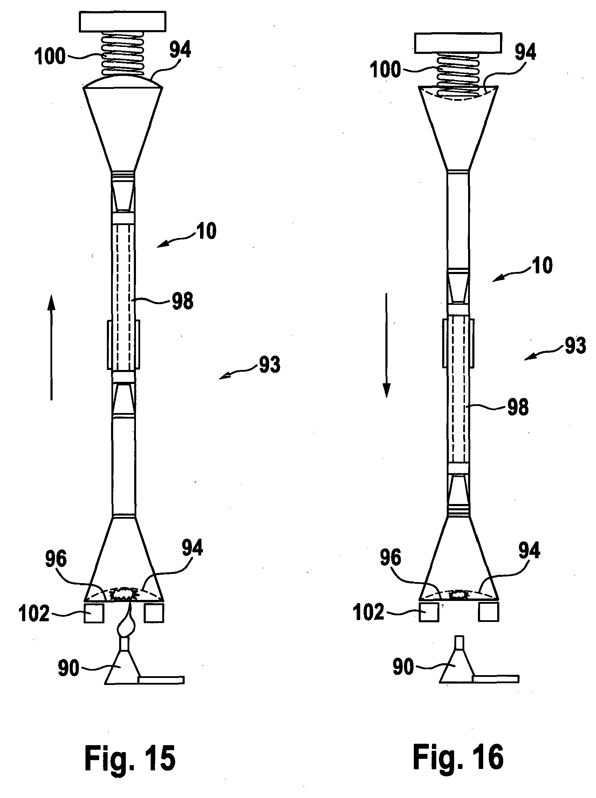

Figures 15 and 16 show a further example of the practical use of an electric linear generator 10 of figure 1 in a thermal energy converting system 93. In figure 15 a heater/burner (external combination) (heat source) 90 is on. A vaporizing fluid with high density (e. g. water) is inside lower density fluid with higher boiling point (e. g. mineral oil) in a space between a diaphragm 94 and a rigid base 96. The external heating causes the water to change into vapor which creates pressure on the oil and pushes the diaphragm 94. Inside the pipe 98 (seated by the diaphragms 94) is a third fluid which is incompressible. In another embodiment, just one fluid is present (e. g. water). Electricity is generated by the electric linear generator 10 and a retaining spring 100 above the upper end of the pipe 98 gets a fraction of the energy.

In figure 16 the burner 90 is off. The high density low boiling point fluid (e. g. water) condenses back to liquid under the pressure caused by the extended spring 100 at the top. Electricity is generated by the electric linear generator 10 and the lower chamber diaphragm
94 gets a fraction of the energy. The spring 100 is expanded and waste heat is extracted by heat exchanger 102 and used for water desalination.

The present invention - at least in a preferred embodiment - provides a system that is low cost, simple, low and easy maintenance that generates electrical power from waves and/or heated fluid, in addition to purifying water. It can also work as low cost multi-generation unit, which combines water purification with cooling.

At least according to a special embodiment of the electric linear generator, a sealed fluid as a medium to transmit for example wave motion and magnetic suspension are used, which reduce the friction losses due to sealing and protect the moving parts from the direct exposure to the harsh and corrosive sea environment. This improves the efficiency and reduces the maintenance cost which is a major cost for wave energy systems.

Since a special embodiment of the system is not tied or directly connected to the waves, it can withstand lateral motion and higher than range waves with much lesser stress to the system structure. This is particularly important when the system is within a fully extended position.

Since the electric linear generator does not use any spring (the spring displacement is proportional to the force) a system which such a generator can be controlled to accept wider range of wave frequencies.

Since it does not use cables or rods to transmit the wave motion (which are constrained by lengths), at least a preferred embodiment of the system can be easily adjusted in position to accommodate for different wave amplitudes.

The features in the foregoing description, in the claims and/or in the accompanying drawings may, both and in any combination thereof, be maternal for realizing the invention in diverse forms thereof.

## Claims

1. Device that can operate as both an electric linear generator or motor (42) comprising
- an elongate stator (47),
- an electrical induction coil extending lengthwise within or around the stator (47),
- a rotor (48) including or carrying at least one permanent magnet and capable of moving linearly to and fro relative to the stator, and
- a means for providing connection of the respective ends of the coil with an electrical energy storage, electrical energy source or electric device,
wherein
the device further comprises a pipe (46), at each pipe end at least one chamber (50) being arranged in the interior of the pipe (46), the pipe being filled with an incompressible fluid and the rotor being localed in the pipe, **characterized in that** two walls of said chambers are formed by two oppositely disposed flexible diaphragms (44) within the pipe that are oriented in the lengthwise direction of the pipe, said chambers are in fluid communication with the environment by way of two oppositely disposed lateral connections (52), and the stator is designed as a sleeve sitting on the pipe.

2. Device according to claim 1, wherein the rotor (16; 48) is substantially rod-shaped.

3. Device according to claim 2, wherein both ends of the rod (16; 48) are expanded by way of a respective section with a conical outer side.

4. Device according to anyone of claims 1 to 3, wherein the rotor (16; 48) is electromagnetically suspended in the sleeve.

5. Device according to claim 4, wherein the sleeve includes at least one superconducting magnet or electromagnet preferably with dynamic control or is surrounded by at least one superconducting magnet or electromagnet preferably with dynamic control.

## Patentansprüche

1. Vorrichtung, die sowohl alls elektrischer Lineargenerator wie auch alls Motor (42) arbeiten kann, umfassend:
- einen länglichen Stator (47);
- eine elektrische Induktionsspule, die sich in Längsrichtung innerhalb des Stators (47) oder um denselben herum erstreckt,
- einen Rotor (48), der mindestens einen Permanentmagneten enthält oder tragt und in der Lage ist, sich linear hin und zurück gegenüber dem Stator zu bewegen, und
- ein Mittel zum Bereitstellen einer Verbindung der jeweiligen Enden der Spule mit einem Elektroenergiespeicher, einer elektrischen Energiequelle oder elektrischen Vorrichtung,
wobei
die Vorrichtung ferner ein Roher (46) umfasst, wobei an jedem Rohrende mindestens eine Kammer (50) im Innern des Rohres (46) angeordnet ist, das Rohr mit einem inkompressiblen Fluid gefülle ist und der Rotor sich im Roher befindet, **dadurch gekennzeichnet, dass** zwei Wände der Kammern durch zwei gegenüberliegend angeordnete flexible Membranen (44) innerhalb des Rohrs gebildet werden, die in der Längsrichtung des Rohres ausgerichtet sind, die Kammern in Fluidkommunikation mit der Umgebung durch zwei entgegengesetzt angeordnete seitliche Verbindungen (52) stehen und der Stator als Manschette aufgelegt ist, die auf dem Rohr sitzt.

2. Vorrichtung nach Anspruch 1, wobei der Rotor (16; 48) im Wesentlichen stabförmig ist.

3. Vorrichtung nach Anspruch 2, wobei beide Enden des Stabs (16; 48) mittels eines entsprechenden Abschnittes mit einer konischen Außenweite erweitert werden.

4. Vorrichtung nach einem der Ansprüche 1 bis 3, wobei der Rotor (16; 48) elektromagnetisch in der Manschette aufgehängt ist.

5. Vorrichtung nach Anspruch 4, wobei die Manschette mindestens einen superleitenden Magneten oder Elektromagnete enthält, vorzugsweise mit dynamischer Regelung, oder von mindestens einem superleitenden Magneten oder Elektromagneten, vorzugsweise mit dynamischer Regelung, umgeben ist.

## Revendications

1. Dispositif pouvant fonctionner aussi bien comme un générateur que comme un moteur électrique linéaire (42), comportant
- un stator (47) allongé,
- une bobinie d'induction électrique si étendant longitudinalement à l'intérieur ou autour du stator (47),
- un rotor (48) comprenant ou portant au moins un aimant permanent et capable d'aller et venir linéairement par rapport au stator, et
- un moyen servant à assurer le raccordement des extrémités respectives de la bobine à un stockage d'énergie électrique, une source d'énergie électrique ou un dispositif électrique,
le dispositif comportant en outre un tube (46), au moins une chambre (50) étant aménagée a chaque extrémité de tube dans l'intérieur du tube (46), le tube étant rempli d'un fluide incompressible et le rotor étant situé dans le tube, **caractérisé en ce que** deux parois desdites chambres sont formées par deux diaphragmes souples (44) disposées de manière opposée à l'intérieur du tube qui sont orientées dans la direction longitudinale du tube, **en ce que** lesdites chambres sont en communication fluidique avec l'environnement par l'intermédiaire de deux raccordements latéraux (52) disposées de manière opposée, et **en ce que** le stator est conçu comme un manchon reposant sur le tube.

2. Dispositif selon la revendication 1, le rotor (16 ; 48) présentant sensiblement la forme d'un barreau.

3. Dispositif selon la revendication 2, les deux extrémités du barreau (16; 48) étant élargis par l'intermédiaire d'une section respective dotée d'une face extérieure clonique.

4. Dispositif salon l'une quelconque des revendications 1 à 3, le rotor (16 ; 48) étant suspendu électromagnétiquement dans le manchon.

5. Dispositif selon la revendication 4, le manchon comprenant au moins un aimant ou électroaimant supraconducteur, de préférence à commande dynamique, ou étant entouré par au moins un animant ou électroaimant supraconducteur, de préférence à commande dynamique.
